# EUROPÄISCHE PATENTANMELDUNG

(11) **EP 1 203 549 A1**
(43) Veröffentlichungstag der Anmeldung: **08.05.2002**
(21) Anmeldenummer: 00811103.1
(22) Anmeldetag: 21.11.2000
(51) Int. Cl.: A47F 3/00, F16B 12/00, A47B 47/00, A47B 13/00

(54) **Bausatz und Verfahren zur Herstellung eines Möbels sowie mit dem Bausatz und dem Verfahren hersgestelltes Möbel**

(30) Priorität: 03.11.2000 EP 00811030
(71) Anmelder: Felix, Peter, 8045 Zürich (CH)
(72) Erfinder: Felix, Peter, 8045 Zürich (CH)
(74) Vertreter: Liebetanz, Michael, Dipl.-Phys.

(57) **Zusammenfassung**

Die Erfindung umfasst einen Bausatz zur Erstellung eines variablen Möbels, ein aus einem solchen Bausatz zusammengesetztes variables Möbel, sowie ein Verfahren zur Herstellung eines variablen Möbels aus genannten Bausatz.

Der Bausatz zur Erstellung eines Möbels umfasst eine Mehrzahl von Elementen (1, 2, 3, 4). An einem ersten dieser Elemente (1) ist ein erstes Klettbandstück (12) und an einem zweiten dieser Elemente (2) ein zweites Klettbandstück (21) derart angebracht, dass die beiden Elemente (1, 2) zum Zwecke der Erstellung des Möbels miteinander verbindbar sind, indem das erste und das zweite Klettbandstück (12, 21) nach Art eines Klettverschlusses durch Aneinanderdrücken miteinander verbunden werden.

Der Bausatz gewährleistet grosse gestalterische Freiheiten zur Erstellung von unterschiedlichen Möbeln aus wiederverwendbaren Elementen.

## Beschreibung

### Technisches Gebiet

Die Erfindung betrifft einen Bausatz zur Herstellung von Möbeln, ein aus einem solchen Bausatz zusammengesetztes variables Möbel, sowie ein Verfahren zur Herstellung eines variablen Möbels aus genanntem Bausatz.

### Stand der Technik

Möbel wie beispielweise Tische, Regale, Vitrinen, Raumteiler, Raumtrennungen, Beleuchtungskörper, aber auch diverse Sitzmöbel sind üblicherweise aus einer Mehrzahl von miteinander verbundenen Elementen zusammengesetzt. Dabei sind die einzelnen Elemente typischerweise entweder durch Verkleben mittels eines geeigneten Klebstoffs oder mit Hilfe von Verbindungselementen (auch als Verbindungsbeschläge bezeichnet) fest miteinander verbunden. Nach dem Erstellen eines Möbels können die miteinander verbundenen Elemente in der Regel nicht mehr vom Möbel gelöst und für einen anderen Zweck verwendet werden. Im Falle von Klebverbindungen ist dies bereits deshalb nicht möglich, weil Klebverbindungen unlösbare Verbindungen sind. Mit Hilfe von Verbindungsbeschlägen können zwar wahlweise wieder lösbare Verbindungen geschaffen werden. Zum Anbringen der Verbindungsbeschläge an den Elementen sind diese jedoch entweder mit den Beschlägen entsprechenden Ausnehmungen, Bohrungen, Anschlägen usw. versehen, oder die Beschläge sind unlösbar an den Elementen festgeklebt. Somit können zwar einzelne Elemente unter Umständen zu Ersatz- und Reparaturzwecken vom Möbel gelöst werden. Weil die Elemente jedoch auch im Falle von auf Verbindungsbeschlägen beruhenden Verbindungen jeweils spezifisch für ein bestimmtes Möbel ausgebildet sind, können sie selbst nach einem allfälligen Loslösen vom Möbel nicht für andere Zwecke verwendet werden.

Weil einerseits Möbel und die zur Erstellung von Möbeln benötigten Elemente vergleichsweise teuer sind und andererseits insbesondere Möbel relativ rasch ändernden Modeströmungen unterworfen sind, besteht der Bedarf nach Möbeln, die aus wiederverwendbaren Elementen hergestellt sind.

### Darstellung der Erfindung

Aufgabe der Erfindung ist die Schaffung von aus wiederverwendbaren Elementen hergestellten variablen Möbeln.

Die Lösung der Aufgabe ist durch die Merkmale des Anspruchs 1 definiert. Gemäss der Erfindung umfasst ein Bausatz zur Erstellung eines Möbels eine Mehrzahl von Elementen. An einem ersten dieser Elemente ist ein erstes Klettbandstück fest angebracht, und an einem zweiten dieser Elemente ist ein zweites Klettbandstück fest angebracht. Die Klettbandstücke sind derart an den Elementen angebracht, dass die beiden Elemente zum Zwecke der Erstellung des Möbels miteinander verbindbar sind, indem sie so gegeneinander gedrückt werden, dass das erste und das zweite Klettbandstück nach Art eines Klettverschlusses durch Aneinanderdrücken miteinander verbunden werden.

Unter einem Klettband wird ein Druckverschlussband (auch als Druckschliessband bezeichnet) verstanden, das durch Andrücken an ein anderes Klettband wahlweise wieder lösbar mit diesem verbindbar ist. Eine Verschlussvorrichtung zum wiederholten Schliessen und Öffnen, die mit zwei Klettbandstücken versehen ist, welche zum Schliessen der Verschlussvorrichtung durch Aneinanderdrücken miteinander verbunden und zum Öffnen der Verschlussvorrichtung durch Auseinanderreissen voneinander getrennt werden können, wird als Klettverschluss bezeichnet. Klettverschlüsse sind insbesondere zum Verschliessen und Öffnen von Kleidungsstücken und Schuhen weit verbreitet, wobei die wahlweise wieder lösbar miteinander verbindbaren Klettbandstücke typischerweise streifenförmig ausgebildet sind und als Klettbandstreifen bezeichnet werden.

Indem die Elemente des erfindungsgemässen Bausatzes mittels Verbindungsvorrichtungen in Form von wahlweise wieder lösbaren Klettverschlüssen miteinander verbindbar und zu Möbeln zusammensetzbar sind, können die Elemente bei Bedarf problemlos und zerstörungsfrei wieder voneinander gelöst werden und z. B. zu einem anderen Möbel zusammengesetzt oder sogar für einen gänzlich anderen Zweck verwendet werden. Die einzelnen, mit Klettbandstükken versehenen Elemente sind beliebig oft wiederverwendbar. Der erfindungsgemässe Bausatz ermöglicht die Herstellung von Möbeln in unterschiedlichsten Formen, wobei die Möbel an individuelle Bedürfnisse angepasst, nach einer gewissen Zeit wieder verändert und an wechselnde Modetrends und/oder geänderte Raumverhältnisse angepasst werden können. Durch die Erfindung wird ein variables Möbelsystem geschaffen, das grosse gestalterische Freiheiten zur Erstellung von unterschiedlichen Möbeln aus wiederverwendbaren Elementen gewährleistet.

Gemäss einer bevorzugten Ausführungsart der Erfindung ist wenigstens eines oder vorzugsweise sogar sämtliche Klettbandstücke aus einem Klettbandmaterial vom Typ Pilzkopfklettband gefertigt. Pilzkopfklettbänder bestehen aus einem Bandmaterial, dessen Oberseite mit einer Vielzahl von pilzförmigen Köpfen versehen ist. Ein Pilzkopfklettband kann mit einem anderen, identisch ausgebildeten Pilzkopfklettband durch einfaches Zusammendrücken verbunden werden, wobei die pilzförmigen Köpfe der beiden Bänder gegenseitig einrasten. Klettband vom Typ Pilzkopfklettband weist den grossen Vorteil auf, dass nur ein einziger Bandtyp zur Herstellung von Klettverschlüssen erforderlich ist. Demgegenüber sind bei den weit verbreiteten Klettverschlüssen auf der Basis von Haken- und Schlingenbändern für jeden Klettverschluss stets paarweise zwei Verbindungselemente aus zwei verschiedenen Bandtypen - einem Hakenband und einem Schlingenband - erforderlich. Durch die Verwendung von Klettbandstücken vom Typ Pilzkopfklettband können bei entsprechenden Formen der Elemente jeweils zwei mit Klettbandstücken versehene Elemente stets nach Art eines Klettverschlusses miteinander verbunden werden, ohne dass auf den Typ der Klettbandstücke geachtet werden muss. Dadurch gewährleistet der Bausatz gemäss dieser Ausführungsart der Erfindung eine grosse Vielfalt von Kombinationsmöglichkeiten zum Erstellen von unterschiedlichen Möbeln.

Vorzugsweise sind die Klettbandstücke derart bemessen und an den Elementen angeordnet, dass sie gleichzeitig als Markierungsmittel zur Erleichterung der Montage der aus dem Bausatz zu erstellenden Möbel dienen. Für diesen Zweck können die Klettbandstücke z.B. alle gleich lang bemessen und in einem regelmässigen Raster an den Elementen angeordnet sein.

Die Elemente des erfindungsgemässen Bausatzes können aus den verschiedensten Materialen gefertigt sein. Als Materialien bevorzugt werden Glas, Metalle (beispielsweise Edelstahl, Kupfer, Aluminium, aber auch Metallschäume) sowie verschiedenste harte Kunsstoffe wie beispielsweise Plexiglas. Naturstoffe wie Holz, Holzwerkstoffe und Stein werden ebenso verwendet wie Metallgeflechte oder Geflechte aus natürlichen Materialien. Auch Textilien sind als Material geeignet. Selbstverständlich sind auch Kombinationen von Elementen aus verschiedenen Materialien in einem Bausatz möglich.

Die vorausgegangene Aufzählung der verwendbaren Materialien ist beispielhaft und keinesfalls auf diese beschränkt.

Gemäss einer weiteren bevorzugten Erfindungsvariante sind wenigstens zwei, vorzugsweise sogar sämtliche Elemente des Bausatzes als ebene Platten ausgebildet. Solche ebenen Platten können für Transport- und Lagerzwecke platzsparend gestapelt werden. Die beiden Oberflächen einer ebenen Platte, welche zu der durch die Platte definierten Ebene parallel sind, werden nachfolgend als Hauptflächen der Platte bezeichnet, während die üblicherweise rechtwinklig zu den Hauptflächen angeordneten Randseiten der Platte nachfolgend als Stirnflächen der Platte bezeichnet werden.

Vorzugsweise sind wenigstens zwei, vorzugsweise sogar sämtliche Elemente des Bausatzes ebene Platten mit einer rechteckigen Form. Rechteckige Platten sind vergleichsweise einfach und kostengünstig herstellbar. Zudem können sie auf vielfältige Arten miteinander kombiniert werden, um Möbel in unterschiedlichen Formen und aus verschiedenen Materialien herzustellen.

Eine weitere bevorzugte Ausführungsart eines erfindungsgemässen Bausatzes mit ebenen Platten zeichnet sich dadurch aus, dass an einer Stirnseite einer ersten Platte ein erstes Klettbandstück und an einer Hauptfläche einer anderen, zweiten Platte ein zweites Klettbandstück derart angebracht sind, dass mittels der beiden Klettbandstücke die erste Platte stirnseitig mit der Hauptfläche der zweiten Platte nach Art eines Klettverschlusses verbindbar ist. Auf diese Art können rechtwinklig zueinander anzuordnende Platten äusserst einfach miteinander verbunden werden. Insbesondere kann an einer Hauptfläche einer Platte mit einem geraden Rand ein Klettbandstreifen in unmittelbarer Nähe dem geraden Rand entlang verlaufend angeordnet werden. Eine solche Platte kann dann mit einer weiteren Platte, die ebenfalls einen geraden Rand hat und dessen diesen Rand definierende Stirnseite mit einem Klettbandstreifen versehen ist, derart unter einem rechten Winkel verbunden werden, dass die beiden Platten nach Art von zwei Wänden eines quaderförmigen Körpers angeordnet sind, die entlang einer Quaderkante nach Art eines Klettverschlusses miteinander verbunden sind.

Gemäss der Erfindung ist ein Möbel aus einem Bausatz mit einer Mehrzahl von Elementen erstellt, wobei an einem ersten dieser Elemente ein erstes Klettbandstück und an einem zweiten dieser Elemente ein zweites Klettbandstück fest angebracht sind und wobei diese beiden Elemente mittels der Klettbandstücke nach Art eines Klettverschlusses miteinander verbunden sind. Aufgrund der klettverschlussartigen Verbindung können die Elemente wieder vom Möbel gelöst und für andere Zwecke wiederverwendet werden.

Vorzugsweise sind sämtliche der miteinander verbundenen Elemente des Möbels lediglich mittels Klettbandstücken miteinander verbunden, so dass das Möbel keine weiteren Verbindungsmittel aufweist. Das Möbel ist somit frei von weiteren Verbindungsmitteln wie z.B. Metall- oder Kunststoffbeschlägen. Ein solches Möbel hat eine schlichte, elegante Form und ist zudem äusserst kostengünstig auf einfache Art herstellbar.

Weiter wird bevorzugt, dass an einer als Standfläche für das Möbel vorgesehenen Unterseite wenigstens eines der Elemente ein Klettbandstück derart angebracht ist, dass es in einer auf einem Boden stehenden Anordnung des Möbels nach Art einer Schutzauflage zwischen dieser Unterseite und dem Boden angeordnet ist. Dieses Klettbandstück kann somit zwei Funktionen ausüben: Es kann einerseits, wenn es an der Unterseite eines Möbels angeordnet ist, als Schutzauflage nach Art einer Sockelauflage oder eines Möbelgleiters dienen, welche die Standfläche des Möbels schützt (insbesondere dann, wenn dieses z. B. auf einem Steinboden aufgestellt ist); oder es kann als Verbindungselement zum Verbinden des Elementes, an dem es angebracht ist, mit weiteren Element dienen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht eines Möbels, das aus einem Bausatz gemäss einer bevorzugten Ausführungsart der Erfindung erstellt ist;
- Fig. 2: das Möbel aus Fig. 1 in einer Ansicht von unten.

Grundsätzlich sind in den Figuren gleiche Teile mit gleichen Bezugszeichen versehen.

### Wege zur Ausführung der Erfindung

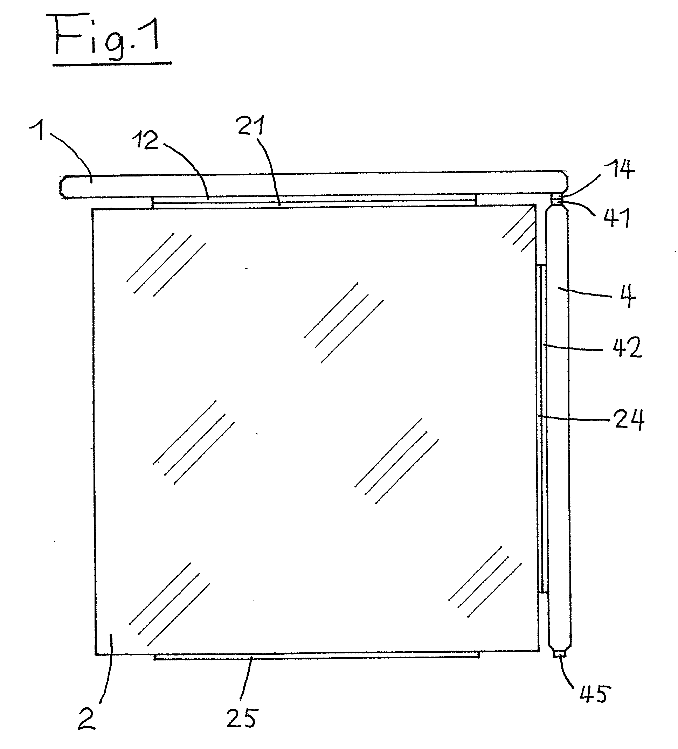

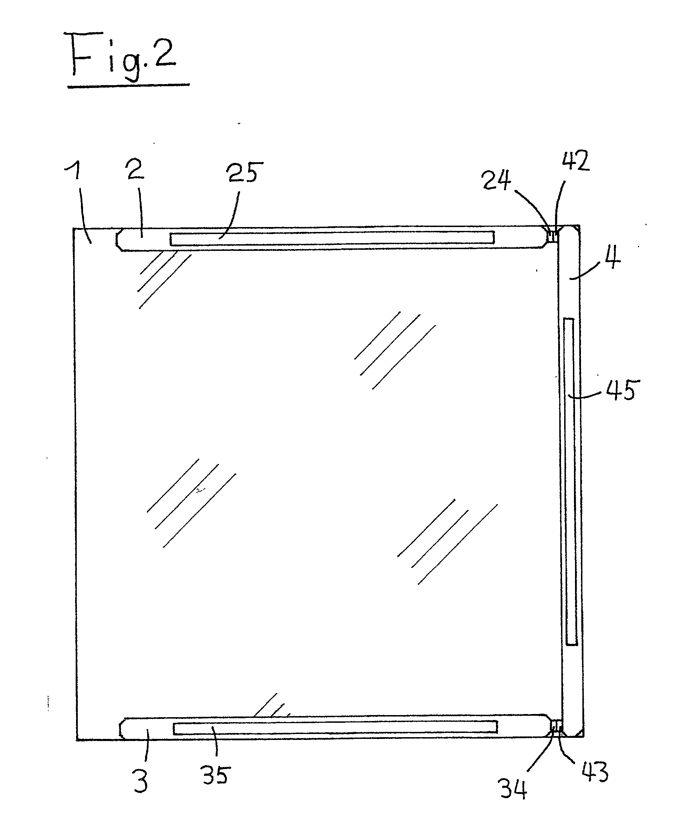

In den Figuren 1 und 2 ist ein Glastisch gemäss einer bevorzugten Ausführungsart der Erfindung dargestellt.

Der in den Figuren 1 und 2 dargestellte Glastisch hat eine im Wesentlichen kubische Form und ist mit Decken-, Rück- und Seitenwänden in Form von ebenen, rechteckigen oder quadratischen Platten 1, 2, 3, 4 versehen. Er umfasst zwei vertikal und parallel zueinander angeordnete, quadratische Platten 2, 3 (Seitenwandplatten 2, 3), welche die Seitenwände 2, 3 des Glastisches bilden. Hinten sind diese beiden Seitenwandplatten 2, 3 je mit einer die Rückwand 4 des Glastisches bildenden rechteckigen Platte 4 (Rückwandplatte 4) verbunden, die vertikal und rechtwinklig zu den beiden Seitenwandplatten 2, 3 angeordnet ist und gleich hoch ist wie diese. Oben auf den beiden Seitenwandplatten 2, 3 und der Rückwandplatte 4 aufliegend ist eine die Decke 1 des Glastisches bildende quadratische Platte 1 horizontal angeordnet, wobei diese Deckenplatte 1 entlang ihrer seitlichen und hinteren Ränder mit den beiden Seitenwandplatten 2, 3 und entlang ihres hinteren Randes mit der Rückwandplatte 4 verbunden ist. Die Front- und Unterseiten der im Wesentlichen kubischen Aussenform des Glastisches sind offen. Der Bausatz, aus dem der in den Figuren 1 und 2 dargestellte Glastisch zusammengesetzt ist, umfasst somit vier Platten 1, 2, 3, 4, welche als Seitenwände 2, 3, Rückwand 4 und Deckenwand 1 für den Glastisch verwendbar sind.

Zum Zwecke der Verbindung mit den anderen Platten und/oder zum Zwecke einer Schutzauflage für die Standflächen des Glastisches sind alle vier Platten 1, 2, 3, 4 mit Klettbandstreifen 12, 14, 21, 24, 25, 34, 35, 41, 42, 43, 45 versehen, die fest an den Platten 1, 2, 3, 4 angebracht sind. Sämtliche Klettbandstreifen 12, 14, 21, 24, 25, 34, 35, 41, 42, 43, 45 sind je identisch zueinander ausgebildet, d.h., sie sind je gleich lang und aus dem gleichen Klettbandmaterial gefertigt. Bei dem in Fig. 1 und 2 dargestellten Ausführungsbeispiel der Erfindung sind die Klettbandstreifen 12, 14, 21, 24, 25, 34, 35, 41, 42, 43, 45 aus einem Bandmaterial vom Typ "Pilzkopfklettband" gefertigt, das von der Firma 3M unter der Bezeichnung "Dual Lock" vertrieben wird. Die Klettbandstreifen 12, 14, 21, 24, 25, 34, 35, 41, 42, 43, 45 sind je fest und unlösbar mittels eines Klebstoffs an den jeweiligen Platten 1, 2, 3, 4 angeklebt.

An der eine Hauptfläche der Deckenplatte 1 bildenden Unterseite der Deckenplatte 1 sind den beiden Seitenrändern entlang, unmittelbar neben diesen Seitenrändern, je ein Klettbandstreifen 12 mittig in Bezug auf die Länge dieser Seitenränder angebracht. Diese Klettbandstreifen 12 wirken mit zwei Klettbandstreifen 21 zusammen, welche je auf den Stirnseiten der Seitenwandplatten 2, 3 bildenden Oberseiten der beiden Seitenwandplatten 2, 3 angebracht sind. Jede der beiden Seitenwandplatten 2, 3 ist somit jeweils mittels eines an ihrer Oberseite angebrachten Klettbandstreifens 21 und eines neben dem entsprechenden Seitenrand an der Unterseite der Deckenplatte 1 angebrachten Klettbandstreifens 12 stirnseitig mit der eine Hauptfläche der Deckenplatte 1 bildenden Unterseite der Deckenplatte 1 verbunden, wobei die beiden Klettbandstreifen 12, 21 jeweils nach Art eines Klettverschlusses miteinander verbunden sind. Dabei sind die Klettbandstreifen 21 an den Oberseiten der Seitenwandplatten 2, 3 einerseits und die den Seitenrändern entlang an der Unterseite der Deckenplatte 1 angebrachten Klettbandstreifen 12 andrerseits derart angeordnet, dass - wenn die entsprechenden Klettbandstreifen 12, 21 jeweils genau übereinanderliegend miteinander verbunden werden - die Deckenplatte 1 gerade in der für den Glastisch richtigen Lage bezüglich den Seitenwandplatten 2, 3 positioniert ist. Die an den Oberseiten der Seitenwandplatten 2, 3 und an der Unterseite der Deckenplatte 1 angeordneten Klettbandstreifen 21, 12 dienen somit nicht bloss zum Verbinden der Seitenwandplatten 2, 3 mit der Deckenplatte 1, sondern sie dienen gleichzeitig auch als Markierungsmittel, welche die Montage des aus den Platten 1, 2, 3, 4 zusammengesetzten Glastisches erleichtern.

An der Unterseite der Deckenplatte 1 ist deren rückseitigen Rand entlang, unmittelbar neben diesem Rand, ein weiterer Klettbandstreifen 14 mittig in Bezug auf die Länge dieses rückseitigen Randes angebracht. Dieser Klettbandstreifen 14 wirkt mit einem Klettbandstreifen 41 zusammen, welcher auf der eine Stirnseite der Rückwandplatte 4 bildenden Oberseite der Rückwandplatte 4 angebracht ist. Die Rückwandplatte 4 ist mittels des an ihrer Oberseite angebrachten Klettbandstreifens 41 und des entlang dem rückseitigen Rand an der Unterseite der Deckenplatte 1 angebrachten Klettbandstreifens 14 stirnseitig mit der eine Hauptfläche der Deckenplatte 1 bildenden Unterseite der Deckenplatte 1 verbunden, wobei die beiden Klettbandstreifen 14, 41 nach Art eines Klettverschlusses miteinander verbunden sind. Der Klettbandstreifen 41 an der Oberseite der Rückwandplatte 4 und der dem rückseitigen Rand entlang an der Unterseite der Deckenplatte 1 angebrachte Klettbandstreifen 14 sind wiederum derart angeordnet, dass - wenn diese beiden Klettbandstreifen 41, 14 genau übereinanderliegend miteinander verbunden werden - die Deckenplatte 1 gerade in der für den Glastisch richtigen Lage bezüglich der Rückwandplatte 4 positioniert ist.

An der eine Hauptfläche der Rückwandplatte 4 bildenden Vorderseite der Rückwandplatte 4 sind den beiden Seitenrändern entlang, unmittelbar neben diesen Seitenrändern, je ein Klettbandstreifen 42, 43 mittig in Bezug auf die Länge dieser Seitenränder angebracht. Diese Klettbandstreifen 42, 43 wirken mit zwei Klettbandstreifen 24, 34 zusammen, welche je auf den Stirnseiten der Seitenwandplatten 2, 3 bildenden Hinterseiten der beiden Seitenwandplatten 2, 3 angebracht sind. Jede der beiden Seitenwandplatten 2, 3 ist somit jeweils mittels eines an ihrer Hinterseite angebrachten Klettbandstreifens 24, 34 und eines neben dem entsprechenden Seitenrand an der Vorderseite der Rückwandplatte 4 angebrachten Klettbandstreifens 42, 43 stirnseitig mit der eine Hauptfläche der Rückwandplatte 4 bildenden Vorderseite der Rückwandplatte 4 verbunden, wobei die beiden Klettbandstreifen 24, 42, 34, 43 jeweils nach Art eines Klettverschlusses miteinander verbunden sind. Dabei sind die Klettbandstreifen 24, 34 an den Hinterseiten der Seitenwandplatten 2, 3 einerseits und die den Seitenrändern entlang an der Vorderseite der Rückwandplatte 4 angebrachten Klettbandstreifen 42, 43 andrerseits derart angeordnet, dass - wenn die entsprechenden Klettbandstreifen 24, 42, 34, 43 jeweils genau übereinanderliegend miteinander verbunden werden - die Rückwandplatte 4 gerade in der für den Glastisch richtigen Lage bezüglich den Seitenwandplatten 2, 3 positioniert ist. Die an den Hinterseiten der Seitenwandplatten 2, 3 und an der Vorderseite der Rückwandplatte 4 angeordneten Klettbandstreifen 24, 34, 42, 43 dienen somit wiederum auch als Markierungsmittel, welche das Zusammensetzen der Platten 2, 3, 4 im Zuge der Montage des Glastisches erleichtern.

Die Unterseite der Rückwandplatte 4 bildet eine Stirnseite derselben und dient als Standfläche, auf welcher der in Fig. 1 und 2 dargestellte Glastisch auf dem Boden (nicht dargestellt) steht. Mittig in Bezug auf die Länge dieser Unterseite ist ein Klettbandstreifen 45 unten an dieser Unterseite angebracht. Dieser hat bei dem in Fig. 1 und 2 dargestellten Glastisch keine Verbindungsfunktion, sondern er dient als Schutzauflage zum Schutze der Unterseite der Rückwandplatte 4. Wenn der Glastisch auf einem flachen Boden steht, ist dieser Klettbandstreifen 45 derart zwischen der Unterseite der Rückwandplatte 4 und dem Boden angeordnet, dass die Rückwandplatte 4 den Boden nirgends direkt berührt. Der Klettbandstreifen 45 bildet dann eine die Rückwandplatte 4 schützende Zwischenschicht zwischen der Rückwandplatte 4 und dem Boden.

Auf analoge Art wie die Unterseite der Rückwandplatte 4 sind auch die Unterseiten der beiden Seitenwandplatten 2, 3, die ebenfalls als Standflächen für den in Fig. 1 und 2 dargestellten Glastisch dienen, je mit einem Klettbandstreifen 25, 35 versehen, welche die Funktion von Schutzauflagen haben und zwischen dem Boden und den Unterseiten der Seitenwandplatten 2, 3 angeordnet sind.

Zusammenfassend ist festzustellen, dass durch die Erfindung ein Bausatz, ein variables Möbel sowie ein Verfahren zur Herstellung eines solchen Möbels zur Verfügung gestellt werden, was grosse gestalterische Freiheiten zur Erstellung von unterschiedlichen Möbeln aus wiederverwendbaren Elementen aus verschiedensten Materialien ermöglicht.

## Patentansprüche

1. Bausatz mit einer Mehrzahl von Elementen (1, 2, 3, 4) zur Erstellung eines Möbels, **dadurch gekennzeichnet, dass** an einem ersten dieser Elemente (1) ein erstes Klettbandstück (12) und an einem zweiten dieser Elemente (2) ein zweites Klettbandstück (21) derart angebracht ist, dass die beiden Elemente (1, 2) zum Zwecke der Erstellung des Möbels miteinander verbindbar sind, indem das erste und das zweite Klettbandstück (12, 21) nach Art eines Klettverschlusses durch Aneinanderdrücken miteinander verbunden werden.

2. Bausatz nach Anspruch 1, **dadurch gekennzeichnet, dass** wenigstens eines, vorzugsweise sogar sämtliche Klettbandstücke (12, 14, 21, 24, 25, 34, 35, 41, 42, 43, 45) vom Typ Pilzkopfklettband sind.

3. Bausatz nach Anspruch 1 oder 2, **gekennzeichnet durch** eine Bemessung und Anordnung der Klettbandstücke (12, 14, 21, 24, 25, 34, 35, 41, 42, 43, 45) an den Elementen derart, dass sie gleichzeitig als Markierungsmittel zur Erleichterung der Montage der aus dem Bausatz zu erstellenden Möbel dienen.

4. Bausatz nach einem der Ansprüche 1 bis 3, **dadurch gekennzeichnet, dass** wenigstens zwei, vorzugsweise sogar sämtliche Elemente (1, 2, 3, 4) des Bausatzes ebene Platten (1, 2, 3, 4) sind.

5. Bausatz nach einem der Ansprüche 1 bis 4, **dadurch gekennzeichnet, dass** wenigstens zwei, vorzugsweise sogar sämtliche Elemente (1, 2, 3, 4) ebene Platten (1, 2, 3, 4) mit einer rechteckigen Form sind.

6. Bausatz nach einem der Ansprüche 1 bis 5, **dadurch gekennzeichnet, dass** die Elemente aus Materialien bestehen, die aus der Gruppe bestehend aus Glas, Metall, Metallschäume, Kunstoffe, Holz, Holzwerkstoffe, Stein, Geflechte, Gewebe und Textilien ausgewählt sind.

7. Bausatz nach Anspruch 4 bis 6, **dadurch gekennzeichnet, dass** an einer Stirnseite einer ersten Platte (1) ein erstes Klettbandstück (12) und an einer Hauptfläche einer anderen, zweiten Platte (2) ein zweites Klettbandstück (21) derart angebracht sind, dass mittels der beiden Klettbandstücke (12, 21) die erste Platte (1) stirnseitig mit der Hauptfläche der zweiten Platte (2) verbindbar ist.

8. Möbel, erstellt aus einem Bausatz nach einem der Ansprüche 1 bis 7 mit einer Mehrzahl von Elementen (1, 2, 3, 4), **dadurch gekennzeichnet, dass** an einem ersten dieser Elemente (1) ein erstes Klettbandstück (12) und an einem zweiten dieser Elemente (2) ein zweites Klettbandstück (21) fest angebracht sind, wobei diese beiden Elemente (1, 2) mittels der Klettbandstücke (12, 21) nach Art eines Klettverschlusses miteinander verbunden sind.

9. Möbel nach Anspruch 8, **dadurch gekennzeichnet, dass** sämtliche der miteinander verbundenen Elemente (1, 2, 3, 4) des Möbels lediglich mittels Klettbandstücken (12, 14, 21, 24, 34, 41, 42, 43) miteinander verbunden sind.

10. Möbel nach Anspruch 8 oder 9, **dadurch gekennzeichnet, dass** an einer als Standfläche für das Möbel vorgesehenen Unterseite eines Elementes (4) ein Klettbandstück (45) derart angebracht ist, dass es in einer auf einem Boden stehenden Anordnung des Möbels nach Art einer Schutzauflage (45) zwischen dieser Unterseite und dem Boden angeordnet ist.

11. Verfahren zur Herstellung eines Möbels nach einem der Ansprüche 8 bis 10 einen Bausatz nach einem der Ansprüche 1 bis 7 verwendend.
